# EUROPEAN PATENT APPLICATION

(11) **EP 4 723 580 A1**
(43) Date of publication of application: **08.04.2026**
(21) Application number: 24830551.8
(22) Date of filing: 17.06.2024
(51) Int. Cl.: H04L 45/00

(54) **SRV6 MESSAGE TRANSMISSION CONTROL METHOD, APPARATUS, DEVICE AND STORAGE MEDIUM**

(30) Priority: 26.06.2023 CN 202310764028
(71) Applicant: ZTE CORPORATION, Shenzhen, Guangdong 518057 (CN)
(72) Inventor: ZHOU, Taoran, Shenzhen, Guangdong 518057 (CN); WU, Haisheng, Shenzhen, Guangdong 518057 (CN); CHEN, Ran, Shenzhen, Guangdong 518057 (CN); ZHU, Haidong, Shenzhen, Guangdong 518057 (CN); LI, Qiang, Shenzhen, Guangdong 518057 (CN)
(74) Representative: Ziebig Hengelhaupt Intellectual Property Attorneys Patentanwaltskanzlei PartGmbB
(86) International application number: PCT/CN2024/099661
(87) International publication number: WO 2025/001905

(57) **Abstract**

The present application discloses a transmission control method, apparatus and device for a SRv6 packet and a storage medium, belonging to the technical field of communication. The present application obtains a Flowspec routing, the Flowspec routing includes a first traffic matching condition configured for the SRv6 traffic, and a traffic control action corresponding to the first traffic matching condition; matches a currently received packet based on the first traffic matching condition, and obtains a target SRv6 packet; and determines a transmission mode of the target SRv6 packet based on the traffic control action.

## Description

### CROSS-REFERENCE TO RELATED APPLICATIONS

This application claims priority to Chinese Patent Application No. 202310764028.1, filed on June 26, 2023. The disclosure of the above-mentioned application is incorporated herein by reference in its entirety.

### TECHNICAL FIELD

The present application relates to the technical field of communication, and more particularly to a transmission control method for a SRv6 packet, a transmission control apparatus for a SRv6 packet, a transmission control device for a SRv6 packet, and a storage medium.

### BACKGROUND

Currently, Flowspec (Flow Specification) technology is limited to traffic match and traffic action for IP traffic (e.g., IPv4 (Internet Protocol version 4) traffic and IPv6 (Internet Protocol version 6) traffic, etc.), and cannot identify traffic other than Native IP (Pure IP) traffic.

With the deepening of Software Defined Networking (SDN) technology, the application of new technologies such as Segment Routing IPv6 (SRv6) will become more widespread. SRv6, based on basic IPv6 network capabilities and Segment Routing (SR) technology, achieves SDN-based network programmability by flexible extension header capabilities. When transmitting traffic by a SRv6 tunnel, after encapsulating the traffic into IPv6 packets, a routing extension header Segment Routing Header (SRH) is inserted into the IPv6 packets to form SRv6 packets. This routing extension header is configured to carry segmented transmission information to achieve the segment routing. However, Flowspec technology is limited to the identification and control of native IP traffic and cannot identify the routing extension header of SRv6 traffic, thus making it impossible to implement device-side traffic control for SRv6 packets via Flowspec Network Layer Reachability Information (NLRI) (hereinafter referred to as "Flowspec routing"), and greatly limiting its application scenarios.

Therefore, the Flowspec technology in related art has limitations in traffic identification and control.

### SUMMARY

The main objective of the present application is to provide a transmission control method for a SRv6 packet, a transmission control apparatus for a SRv6 packet, a transmission control device for a SRv6 packet and a storage medium, aiming to solve the technical problem that Flowspec technology has limitations in identifying and controlling traffic.

To achieve the above objective, the present application provides a transmission control method for a SRv6 packet, applied to a routing device, including:
obtaining a Flowspec routing, the Flowspec routing includes a first traffic matching condition configured for the SRv6 traffic, and a traffic control action corresponding to the first traffic matching condition;
matching a currently received packet based on the first traffic matching condition, and obtaining a target SRv6 packet; and
determining a transmission mode of the target SRv6 packet based on the traffic control action.

The present application further provides a transmission control apparatus for an SRv6 packet, characterized by including:
a routing receiving module configured for obtaining a Flowspec routing, the Flowspec routing includes a first traffic matching condition configured for the SRv6 traffic, and a traffic control action corresponding to the first traffic matching condition;
a matching module configured for matching a currently received packet based on the first traffic matching condition, and obtaining a target SRv6 packet; and
a control module configured for determining a transmission mode of the target SRv6 packet based on the traffic control action.

The present application further provides a transmission device for an SRv6 packet including: a memory, a processor, and a transmission program for the SRv6 packet stored in the memory and executable on the processor, the transmission program for the SRv6 packet is configured to implement the transmission control method for the SRv6 packet as described in any of the above.

The present application further provides a storage medium storing a transmission program for a SRv6 packet, the transmission program for the SRv6 packet is configured to implement the transmission control method for the SRv6 packet as described in any of the above when executed by a processor.

### BRIEF DESCRIPTION OF THE DRAWINGS

FIG. 1 is a schematic flow chart of a transmission control method for a SRv6 packet of a first embodiment of the present application.
FIG. 2 is a schematic diagram of a first scenario of a transmission control method for a SRv6 packet of the first embodiment of the present application.
FIG. 3 is a schematic diagram of a second scenario of a transmission control method for a SRv6 packet of the first embodiment of the present application.
FIG. 4 is a schematic diagram of a third scenario of a transmission control method for a SRv6 packet of the first embodiment of the present application.
FIG. 5 is a schematic diagram of a fourth scenario of a transmission control method for a SRv6 packet of the first embodiment of the present application.
FIG. 6 is a schematic diagram of a fifth scenario of a transmission control method for a SRv6 packet of the first embodiment of the present application.
FIG. 7 is a schematic diagram of a sixth scenario of a transmission control method for a SRv6 packet of a second embodiment of the present application.
FIG. 8 is a schematic structural view of a transmission control device for a SRv6 packet in a hardware operating environment involved in an embodiment of the present application.
FIG. 9 is a schematic view of a transmission control apparatus for a SRv6 packet of the first embodiment of the present application.

The realization of the purpose, functional features and advantages of the present application will be further described in conjunction with the embodiments and with reference to the accompanying drawings.

### DETAILED DESCRIPTION OF THE EMBODIMENTS

It should be understood that the specific embodiments described herein are merely illustrative and not intended to limit the scope of the present application. Although the terms first, second, third, etc., may be used herein to describe various types of information, such information should not be limited to these terms. These terms are used only to distinguish information of the same type from one another. For example, the first information may also be referred to as the second information without departing from the scope of the present application, and similarly, the second information may also be referred to as the first information.

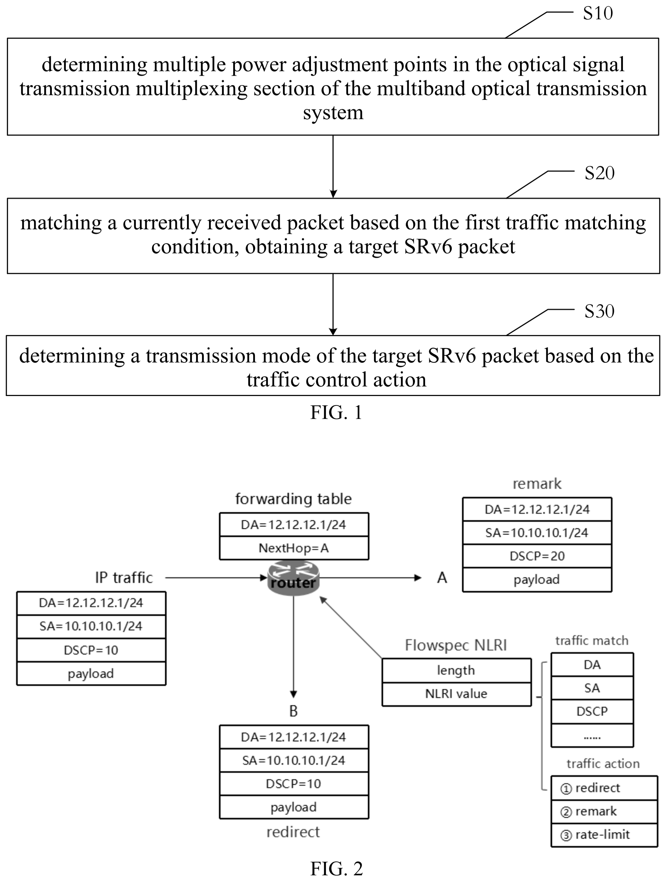

The present application provides a transmission control method for a SRv6 packet. Referring to FIG. 1, in this embodiment, the transmission control method for the SRv6 packet includes:

Step S10: obtaining a Flowspec routing; the Flowspec routing includes a first traffic matching condition configured for the SRv6 traffic, and a traffic control action corresponding to the first traffic matching condition.

Step S20: matching a currently received packet based on the first traffic matching condition, and obtaining a target SRv6 packet.

Step S30: determining a transmission mode of the target SRv6 packet based on the traffic control action.

As an example, the transmission control method for the SRv6 packet is applied to the transmission control apparatus for the SRv6 packet. This transmission control apparatus for the SRv6 packet is subordinate to the transmission control device for the SRv6 packet. The transmission control device for the SRv6 packet can be a routing device, and the routing device can be a router.

With the deepening of Software Defined Networking (SDN) technology, the application of new technologies such as Segment Routing IPv6 (SRv6) will become more widespread. SRv6, based on basic IPv6 network capabilities and Segment Routing (SR) technology, achieves SDN-based network programmability by flexible extension header capabilities. When transmitting traffic by a SRv6 tunnel, after encapsulating the traffic into IPv6 packets, a routing extension header Segment Routing Header (SRH) is inserted into the IPv6 packets to form SRv6 packets. This routing extension header is configured to carry segmented transmission information to achieve the segment routing. However, Flowspec technology is limited to the identification and control of native IP traffic and cannot identify the routing extension header of SRv6 traffic, thus making it impossible to implement device-side traffic control for SRv6 packets via Flowspec Network Layer Reachability Information (NLRI) (hereinafter referred to as "Flowspec routing"), and greatly limiting its application scenarios.

Currently, Flowspec technology is used for policy-based routing of inbound ports on routing devices. By receiving the remote Flowspec routing and applying them to the corresponding ports on the device; for inbound IP traffic to the ports of Global or Virtual Private Network (VPN), traffic matching and traffic control actions are designed, respectively used for accurate identification and policy enforcement of traffic. When traffic enters the inbound port of the routing device, it is matched against the traffic matching condition of the Flowspec routing. If all matching items are matched, then executing the traffic forwarding action according to the Flowspec routing's traffic control action. If any item does not meet the traffic matching condition requirements, the match is not found, and executing the forwarding action according to the forwarding table pre-configured on the routing device.

As an example, as shown in FIG. 2, the Destination Address (DA) of the device inbound traffic is 12.12.12.1/24, the source address (SA) is 10.10.10.1/24, and the (Differentiated Services Code Point (DSCP) value is 10. Based on the forwarding table pre-configured by the routing device, the next hop is the outgoing port A. When the routing device receives the Flowspec routing, matching the IP traffic based on the destination address (DA), source address, and DSCP in the Flowspec routing. The corresponding traffic control action includes at least one of the following:
1) redirect; it can ignore the forwarding table, and select the new next hop as port B specified in the Flowspec routing;
2) remark; it can rewrite the DSCP value in the forwarded packet to 20;
3) rate-limit; it can defining the upper limit of traffic rate, data content size, etc.

This embodiment aims to add a first traffic matching condition configured for SRv6 traffic and a traffic control action corresponding to the first traffic matching condition to the Flowspec routing. When receiving a packet, it can be matched to SRv6 traffic and perform transmission control on its packet, thereby achieving device-side traffic control for SRv6 packets, and enriching the application scenarios of Flowspec technology.

The specific steps are as follows:
Step S10: obtaining a Flowspec routing; the Flowspec routing includes a first traffic matching condition configured for the SRv6 traffic, and a traffic control action corresponding to the first traffic matching condition.

As an example, the Flowspec routing is distributed to the local routing device via the Flowspec server.

As an example, the Flowspec routing includes a first traffic matching condition configured for the SRv6 traffic, and a traffic control action corresponding to the first traffic matching condition.

As an example, the network layer reachability information includes address families and sub-address families. The address family is a configuration module of a network layer protocol, the configuration module is used to classify and configure different types of networks for easier management of different network types.

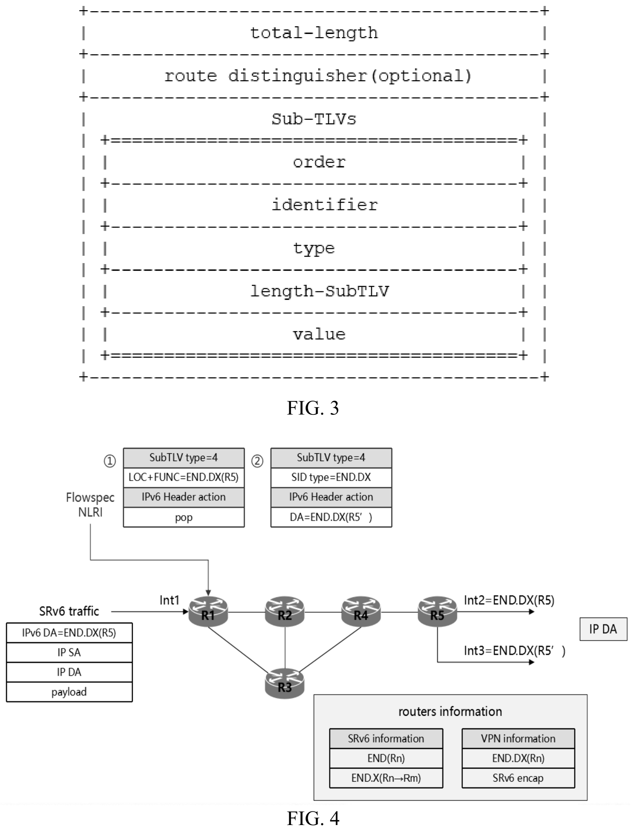

As shown in FIG. 3, the Flowspec version 2 (FSv2) BGP NLRI encapsulation structure, in the existing Flowspec Version 2 (Flowspec routing) design, encapsulates data by TLV packets. A TLV is a combination of Type-Length-Value, where Type indicates the type of information carried in the structure; Value indicates the information carried by the TLV; and Length indicates the effective byte length of the "Value" field. TLVs can be nested structures, and nested TLVs are called sub-TLVs. Each sub-TLV can serve as a traffic matching condition. This FSv2 is capable of identifying IPv4, IPv6, VPNv4 (Virtual Private Network version 4), and VPNv6 (Virtual Private Network version 6), but it lacks the ability to identify SRv6 traffic.

The definitions of each field in the existing FSv2 BGP NLRI (Flowspec routing) are as follows, as shown in FIG. 3:
1) total-length: including the field length of all Sub-TLVs;
2) order: the order of traffic matching conditions;
3) identifier: the identifier of the traffic control action;
4) type: an identifier for a Flowspec routing in FSv2 TLV format;
5) length-Subtlv: the length of the Sub-TLV field;
6) value: the value contained in the Sub-TLV.

In the existing FSv2 BGP NLRI (Flowspec routing), the "type" field is configured as follows:
- 0 - reserved field;
- 1 - IP traffic rules: IP traffic rules (traffic matching condition for IP traffic);
- 2 - L2 traffic rules: data link layer traffic rules;
- 3 - SFC traffic rules: service chain traffic rules;
- 4 - SFC VPN traffic rules: VPN service chain traffic rules;
- 5 - BGP/MPLS VPN IP traffic rules: BGP, MPLS (Multi-Protocol Label Switching), VPN, and IP traffic rules;
- 6 - BGP/MPLS VPN L2 traffic rules: BGP, MPLS, VPN, and L2 traffic rules.

In this embodiment, the Flowspec routing further includes a route distinguisher, which is used to identify VPN traffic.

As an example, by setting the route distinguisher in the existing FSv2 BGP NLRI, replacing the original traffic matching condition for VPN traffic; that is, removing the type field related to VPN traffic, and identifying VPN traffic by the route distinguisher.

The "type" field in this embodiment is designed as follows:
- 0 - reserved field;
- 1 - L2 (Ether or VPN) traffic match;
- 2 - L3 (IP or VPN) traffic match: network layer traffic rules;
- 3 - MPLS traffic match;
- 4 - SRv6 traffic match: Segment Routing IPv6 (SRv6) traffic rules;
- 5 - reserved for EVPN: Ethernet Virtual Private Network (EVPN) traffic rules.

As an example, SRv6 traffic match refers to the first traffic matching condition configured for the SRv6 traffic.

Step S20: matching a currently received packet based on the first traffic matching condition, and obtaining a target SRv6 packet.

Since SRv6 is based on IPv6 network capabilities and Segment Routing (SR) technology, it achieves SDN-based network programmability via flexible extension header capabilities. When transmitting traffic via a SRv6 tunnel, after encapsulating the traffic into an IPv6 packet, a routing extension header SRH (Segment Routing Header) needs to be inserted into the IPv6 packet to form the SRv6 packet. This routing extension header is configured to carry segmented transmission information to achieve the segment routing. SRv6 packets differ significantly from traditional IP packets.

In this embodiment, the SRv6 traffic includes SRv6 Policy traffic, and the target SRv6 packet includes the SRv6 Policy packet corresponding to the SRv6 Policy traffic. The SRv6 Policy packet encapsulates a routing extension header.

In this embodiment, the SRv6 traffic further includes SRv6 Best Effort (BE) traffic, and the target SRv6 packet further includes the SRv6 BE packet corresponding to the SRv6 BE traffic. The SRv6 BE packet encapsulates an IPv6 header.

As an example, compared to the transmission of SRv6 Policy traffic, the encapsulation of the corresponding packet for SRv6 BE traffic lacks a routing extension header. Therefore, this embodiment respectively designs corresponding traffic matching conditions for SRv6 BE traffic and SRv6 Policy traffic to achieve the identification of SRv6 traffic.

In this embodiment, for SRv6 Policy traffic, a matching item in the first traffic matching condition includes at least one of following:
a next header field in the routing extension header;
a segment list field in the routing extension header;
a type field of a segment identifier in the routing extension header;
a partial segment identifier field in the routing extension header;
a remaining segment field in the routing extension header;
a Flags field in the routing extension header; and
a Tag field in the routing extension header.

As an example, during SRv6 packet forwarding, the IPv6 header encapsulated within the routing extension header encapsulates a Next Header field. Typically, the Next Header defaults to 43. The Next Header field is configured to identify other routing extension headers following the basic IPv6 header, and there can be zero, one, or more routing extension headers. All routing extension headers contain a Next Header field. The value of the Next Header field indicates the different packet types following the routing extension header. Therefore, the Next Header field in the routing extension header can be used as a matching item in the first traffic matching condition for SRv6 Policy traffic.

As an example, by default, the value of Segment Identifier (SID) corresponds to the Destination Address (DA) in the IPv6 header. The value of the segment identifier can be selected via the segment list (SL) to determine the destination address of the SRv6 packet. Therefore, the segment list field in the routing extension header can be used as the matching item for the first traffic matching condition for SRv6 Policy traffic.

As an example, the segment identifiers can have various types, including END (corresponding to the address of the routing device), END.X (corresponding to the address of the transmission link), END.DT (corresponding to the VPN address), and END.DX (corresponding to the VPN link address). Therefore, the type field of the segment identifier in the routing extension header can be used as the matching item for the first traffic matching condition for SRv6 Policy traffic.

Aiming at the segment identifier announcement sent from the remote end, in the case where the local routing device lacks identification capabilities, the matching item for the type field of the segment identifier in the routing extension header will be defined as a miss.

As an example, the draft <draft-ietf-idr-flowspec-SRv6-02> uses the partial segment identifier field in the routing extension header as the matching item for the first traffic matching condition for SRv6 Policy traffic. This embodiment continues to use this matching item. By default, aiming at the destination address in the IPv6 header, an IPv6 address is 128 bits, and the SRv6 SID is also a 128-bit value in IPv6 address form, consisting of three parts: locator, function, and argument. Locator: having location functionality and providing IPv6 routing capabilities, implementing the addressing and forwarding by this field. Function: characterizing the forwarding action to be performed; different forwarding actions correspond to different Functions. Arguments: supplementing the Function, specifying the corresponding parameters during execution. Therefore, by identifying the partial segment identifier field in the routing extension header, the corresponding SRv6 Policy traffic can be matched.

As an example, the remaining segment (Segment Left) field identifies the index of the current segment identifier. Therefore, the remaining segment field in the routing extension header can be used as a matching item for the first traffic matching condition aiming at the SRv6 Policy traffic.

As an example, the Flags field identifies the packet type. Therefore, the Flags field in the routing extension header can be used as a matching item for the first traffic matching condition aiming at the SRv6 Policy traffic.

As an example, the Tag field identifies packets of the same type or packets of the same group. Therefore, the Tag field in the routing extension header can be used as a matching item for the first traffic matching condition aiming at the SRv6 Policy traffic.

As an example, based on the first traffic matching condition, the currently received packet is matched. If the currently received packet matches at least one of the fields corresponding to the matching item, then the packet is determined to be the target SRv6 packet.

As an example, the traffic control actions in the original Flowspec technology include rate-limit, remark, and redirect.

In this embodiment, the redirection action is designed only based on the characteristics of the SRv6 packet.

As an example, to facilitate transmission control of the SRv6 Policy packet, this embodiment designs a traffic control action corresponding to the first traffic matching condition aiming at the SRv6 Policy packet.

In this embodiment, the traffic control action includes a first redirection actions configured for the SRv6 Policy traffic, and the first redirection action includes at least one of following:
a routing extension header popping action, configured to remove the routing extension header of the SRv6 Policy packet, encapsulate a preset segment identifier into the IPv6 header of the SRv6 Policy packet, and iterate the SRv6 Policy packet to a forwarding process of the SRv6 BE traffic by querying a forwarding table (that is, altering the packet type); the forwarding process is configured to map to a target port of the target SRv6 packet (based on the forwarding process of the SRv6 BE traffic, forwarding the SRv6 Policy packet to the target port, and achieving the transmission control of the packet).

The routing extension header popping action is suitable for public network forwarding scenarios. Aiming at VPN scenarios, after popping the routing extension header, the forwarding of SRv6 Policy packets cannot be achieved solely by the inner address.

A remaining segment rewriting action, configured to modify an assignment of a remaining segment in the SRv6 Policy packet; an assignment of a modified remaining segment indicates a corresponding segment identifier, and the segment identifier is configured to map to a target port of the target SRv6 packet (the value of the segment identifier corresponds to the destination address in the IPv6 header; based on the specified segment identifier, altering the destination address of the SRv6 Policy packet, and achieving the transmission control of the packet).

A Tag value modification action, configured to modify a Tag value in the SRv6 Policy packet, the Tag value is configured to indicates a packet type of the SRv6 Policy packet, the packet type is mapped to a data type of the target SRv6 packet (by modifying the Tag value, altering the data type of the target SRv6 packet, thereby altering the processing flow of the target SRv6 packet by other routing devices, and achieving transmission control of the packet).

A segment identifier modification action, configured to delete, add, or change a segment identifier in the segment list, and the segment identifier is mapped to a target port of the target SRv6 packet (by deleting, adding, or changing the segment identifier, the target port of the target SRv6 packet is altered).

In this embodiment, aiming at the SRv6 BE traffic, the matching item in the first traffic matching condition further includes the destination address (DA) field in the IPv6 header.

As an example, to facilitate transmission control of SRv6 BE packets, this embodiment designs a traffic control action corresponding to the first traffic matching condition aiming at the SRv6 BE packet.

In this embodiment, the traffic control action further includes a second redirection action configured for the SRv6 BE traffic, and the second redirection action including at least one of following:
an IPv6 header popping action, configured to remove an IPv6 header of the SRv6 BE packet, and query a forwarding table based on a destination IP address in a payload; the forwarding table is mapped to the target port of the target SRv6 message (by removing the IPv6 header of the SRv6 BE packet and altering the data type of the SRv6 BE packet, thereby altering the target port of the target SRv6 packet, and achieving transmission control of the packet);
a source address modification action, configured to modify a source address in the SRv6 BE packet to allow other routing devices to determine whether to receive the SRv6 BE packet based on the source address (by modifying the source address in the SRv6 BE packet, altering the processing flow of the SRv6 BE packet by other routing devices, and achieving transmission control of the packet); and
a destination address modification action, configured to modify the destination address of the IPv6 header in the SRv6 BE packet; the destination address is mapped to a target port of the target SRv6 BE packet (by modifying the destination address, altering the target port of the target SRv6 BE packet, thereby achieving the transmission control of the packet).

Step S30: determining a transmission mode of the target SRv6 packet based on the traffic control action.

As an example, once the target SRv6 packet is determined, transmission control can be performed on the target SRv6 packet based on the traffic control action corresponding to the first traffic matching condition.

As an example, as shown in FIG. 4, the routing devices include: R1, R2, R3, R4, and R5. These routing devices are configured with routing protocols such as IS-IS, BGP, etc., and the configurations of each forwarding path are identical. SRv6 is enabled, and SRv6-related information and VPN-related information is configured. END(Rn) represents the END SID (destination address) information of the routing device Rn (the routing device's number), END.X(Rn to Rm) represents the END.X SID (destination transmission link address) information of routing devices Rn to Rm, and END.DX(Rn) represents the END.DX SID (destination VPN link address) information corresponding to routing device Rn.

When the inbound port of the routing device R1 receives the SRv6 traffic: the inbound public network port Int1 of routing device R1 receives an SRv6 BE packet encapsulated with IPv6 DA=END.DX(R5) (the destination address is the VPN link corresponding to routing device R5).

Assuming that Flowspec routing 1 includes: Sub-TLV type=4, the matching item in the first traffic matching condition includes a partial segment identifier field (constraining the values of Locator and Function); the corresponding traffic control action includes the IPv6 header popping action (aiming at the SRv6 BE traffic).

Flowspec routing 2 includes: Sub-TLV type=4; the matching item in the first traffic matching condition includes SID type=END.DX (the type field of the segment identifier is the VPN link address); the corresponding traffic control action includes a destination address modification action: IPv6 DA=END.DX (R5) (modifying the IPv6 destination address encapsulated in the SRv6 BE packet to the VPN link address corresponding to the routing device R5).

When Flowspec routing is not received, the public network port Int1 inbound of routing device R1 receives a SRv6 BE packet corresponding to the SRv6 BE traffic. By querying the IPv6 forwarding table, the destination address in the outer IPv6 header is the routing device R5. The routing device R5 completes the popping action of the outer layer IPv6 header of the SRv6 BE packet, and iterates, based on the modified END.DX (VPN link address), to send SRv6 BE packet with popped outer IPv6 header from the outbound port Int2 based on the local forwarding table.

When receiving a route of a Flowspec routing 1, verifying the validity of Flowspec routing 1 and applying it to the inbound port Int1. The inbound port of the routing device R1 receives SRv6 BE traffic, and determines the traffic matching condition as SRv6 corresponding to the first traffic matching condition based on the Sub-TLV type=4 field. Based on the corresponding values of the Locator field and Function field in the first traffic matching condition, hitting the END.DX(R5) (the VPN link address corresponding to the routing device R5) field. Correspondingly executing the IPv6 header popping action. In the forwarding plane, routing device R1 queries the forwarding table based on the destination IP address in the payload to complete the forwarding.

As an example, verifying the validity of the Flowspec routing: first, the traffic matching condition requirement includes the network layer destination prefix (Destination Prefix); second, if the traffic control action includes a redirect IP, it requires that the redirect destination address be sourced from the unicast BGP route published by the Flowspec server.

When receiving the Flowspec routing 2, verifying the validity of Flowspec routing 2 and applying it to the inbound port Int1. The inbound port of the routing device R1 receives SRv6 BE traffic, and determines the traffic matching condition as SRv6 corresponding to the first traffic matching condition based on the Sub-TLV type=4 field. Based on the SID type=END.DX field in the first traffic matching condition, hitting the END.DX(R5) field. Correspondingly executing the destination address modification action, and modifying the IPv6 destination address encapsulated in the SRv6 BE packet to the VPN link address corresponding to routing device R5. In the forwarding plane, the routing device R1 queries the IPv6 forwarding table, and forwards the SRv6 BE packet to the routing device R5 based on the destination address in the outer IPv6 header. Since the destination address is the VPN link address corresponding to R5, the routing device R5 is required to complete the pop-up of the outer IPv6 encapsulation, and iterate, based on the modified END.DX, to send SRv6 BE packet with popped outer IPv6 header from the outbound port Int3 based on the local forwarding table.

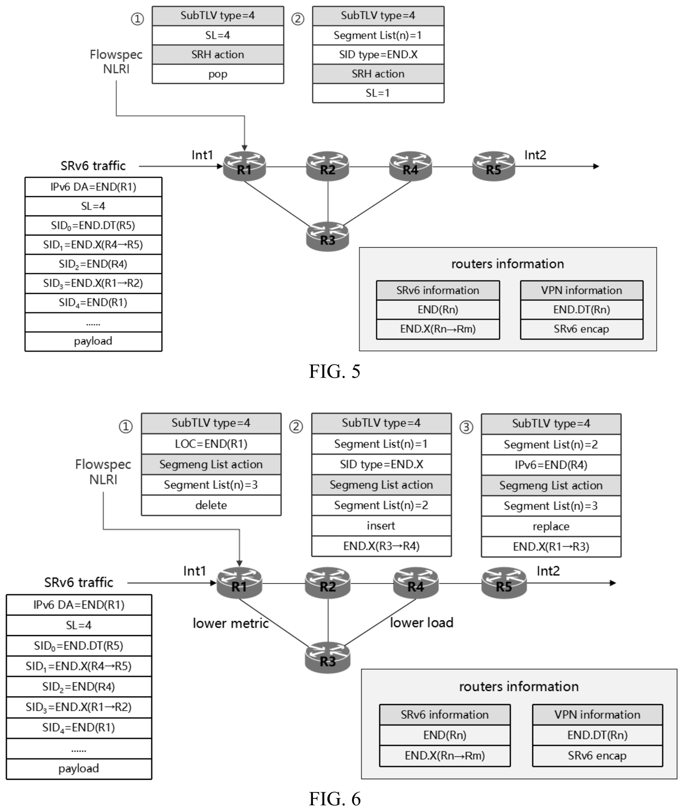

As an example, as shown in FIG. 5, the inbound port of routing device R1 receives that a destination IPv6 address is R1, and SL=4 (segment list field is 4). Based on SID (4) to SID (0), determining the forwarding path as R1-R2-R4-R5 and sending the SRv6 Policy packet to the R5 private network outbound port (VPN link).

Assuming Flowspec routing 3: Sub-TLV type=4, the matching item in the first traffic matching condition includes SL=4. The corresponding traffic control action includes the routing extension header popping action, and assigning SID(0) = END.DT(R5) to IPv6 DA (iterating the SRv6 Policy packet to the forwarding process of the SRv6 BE traffic).

Flowspec routing 4: Sub-TLV type=4. The matching item in the first traffic matching condition includes SID(0)type=END.X. The corresponding traffic control action includes the remaining segment (segment left, SL) rewrite action.

When Flowspec routing is not received, the inbound port Int1 of the routing device R1 receives SRv6 Policy traffic. The destination address in the outer IPv6 header hits the local segment list, executes SL-1=3. The DA in the IPv6 header is updated to SID(3)=END(R2). The next hop node is the routing device R2, thus forwarding the SRv6 Policy traffic from R1 to R2. Similarly, forwarding the SRv6 Policy traffic from R2 to R4 and R5. Finally, R5 executes the routing extension header popping action, iterates the SRv6 Policy packet to the forwarding process of the SRv6 BE traffic, and sends out from the private network egress port Int2. The overall traffic forwarding path is R1-R2-R4-R5.

When receiving the Flowspec routing 3, verifying the validity of Flowspec routing 3 and applying it to the inbound port Int1. Based on the Sub-TLV type=4 field, determining the traffic matching condition to be the first traffic matching condition corresponding to SRv6. Based on the SL=4 field in the first traffic matching condition, hitting the SRv6 Policy traffic. Correspondingly, executing the routing extension header popping action, and assigning SID(0) to IPv6 DA=END.DT(R5). In the forwarding plane, the routing device R1 queries the forwarding table to iterate the SRv6 Policy packet to the forwarding process of the SRv6 BE traffic, and transmits it to routing device R5. The routing device R5 performs the pop-up of the outer IPv6 header of the SRv6 BE packet, the routing device R5 completes the pop-up of the outer IPv6 packet encapsulation, and iterates, based on the END.DX, to send SRv6 BE packet with popped outer IPv6 header from the outbound port Int2 based on the local forwarding table.

When receiving the route of Flowspec routing 4, verifying the validity of Flowspec routing 4 and applying it to the inbound port Int1. The inbound port of the routing device R1 receives SRv6 Policy traffic. Based on the Sub-TLV type=4 field, determining the traffic matching condition to be the first traffic matching condition corresponding to SRv6. Based on the SID (1) type=END.X field in the first traffic matching condition, hitting the SRv6 Policy traffic. Correspondingly, executing the remaining segment rewrite action, rewriting SL=4 to SL=1, that is, assigning IPv6 DA=END.X (R4 to R5). In the forwarding plane, the routing device R1, based on the local segment list, executing SL=1, updating the DA in the IPv6 header to SID(1)=END.X (R4 to R5). The next-hop node is R4, so the SRv6 Policy traffic is forwarded to R5 via R4. The routing device R5 completes the pop-up of the outer IPv6 encapsulation, and iterates, based on the END.DX, to send SRv6 BE packet with popped outer IPv6 header from the outbound port Int2 based on the local forwarding table.

As an example, as shown in FIG. 6, the inbound port of routing device R1 receives SRv6 traffic: the destination IPv6 address is R1 END.SID, SL=4 (segment list field is 4), based on SID(4) to SID(0), determining the forwarding path to be R1-R2-R4-R5, and sending to an SRv6 Policy packet of the R5 private network outbound port (VPN link).

Assuming Flowspec routing 5: Sub-TLV type=4, the matching item in the first traffic matching condition includes LOC (Locator) = END(R1) of the IPv6 DA, and the default SID is the DA in the current IPv6 header. The corresponding traffic control action includes deleting SID(3).

Flowspec routing 6: Sub-TLV type=4, the matching item in the first traffic matching condition includes SID(1) type=END.X, and the corresponding traffic control action includes inserting SID(3)=END.X (R3 to R4) before SID(2).

Flowspec routing 7: Sub-TLV type=4, the matching item in the first traffic matching condition includes SID(1) type=END.X, and the corresponding traffic control action includes making SID(3)=END.X (R1 to R3).

When Flowspec routing is not received, the inbound port Int1 of the routing device R1 receives SRv6 Policy traffic. The destination address in the outer IPv6 header hits the local segment list, executes SL-1=3, the DA in the IPv6 header is updated to SID(3)=END(R2)., the next hop node is the routing device R2, so the SRv6 Policy traffic is forwarded from R1 to R2. Similarly, the SRv6 Policy traffic is forwarded from R2 to R4 and R5. Finally, R5 executes the routing extension header popping action, iterating the SRv6 Policy packet to the forwarding process of the SRv6 BE traffic, which is sent out from the private network outbound port Int2. The overall traffic forwarding path is R1-R2-R4-R5.

When receiving Flowspec routing 5, verifying the validity of Flowspec routing 5 and applying it to the inbound port Int1. Based on the Sub-TLV type=4 field, determining the traffic matching condition as SRv6 corresponding to the first traffic matching condition. Based on the LOC=END(R1) field in the first traffic matching condition, hitting the SRv6 Policy traffic. Correspondingly executing the SID (3) deletion action. In the forwarding plane, the routing device R1 queries the forwarding table and determines the relative values of SID(n) and m and n in SL=m for the action item. (If n < m, executing SL-1-1=2; if n ≥ m, executing SL-1=3.); the DA in the IPv6 header is updated to SID(2) = END(R4), that is, the next hop node is R4. Because of the lower metric value (the metric value is a variable value obtained after the routing protocol selection algorithm is completed, such as the number of devices passing through the routers, bandwidth, etc.), the next hop node is determined to be R3. Then the SRv6 Policy traffic is forwarded from R1 through R3 and R4 to R5. Finally, R5 performs the pop-up of the outer IPv6 encapsulation, and iterates, based on the END.DX, to send SRv6 Policy packet with popped outer IPv6 header from the outbound port Int2 based on the local forwarding table. The overall traffic forwarding selects a path with lower resource consumption, changing to R1-R3-R4-R5.

When receiving Flowspec routing 6, verifying the validity of Flowspec routing 6 and applying it to the inbound port Int1. The inbound port of routing device R1 receives SRv6 Policy traffic, and based on the Sub-TLV type=4 field, determines the traffic matching condition as SRv6 corresponding to the first traffic matching condition. Based on the SID(1) type=END.X field in the first traffic matching condition, hitting the SRv6 Policy traffic. Correspondingly executing that newly adding SID(3) = END.X (R3 to R4). In the forwarding plane, the routing device R1, based on the local segment list, executing SL-1=3, updating the DA in the IPv6 header to SID(3)=END.X (R3 to R4). If the next-hop node is R3, the traffic is forwarded from R1 to R2. After newly adding SID(3), the traffic is forwarded from R2 to R3, and then based on END.X (R3 to R4), the traffic is forwarded to R4 and R5. Finally, R5 completes the pop-up of the outer IPv6 encapsulation, and iterates, based on the END.DX, to send SRv6 BE packet with popped outer IPv6 header from the outbound port Int2 based on the local forwarding table. The overall traffic forwarding selected the path with lower resource consumption, changing to R1-R2-R3-R4-R5.

When receiving Flowspec routing 7, verifying the validity of Flowspec routing 7 and applying it to the inbound port Int1. The inbound port of routing device R1 receives SRv6 Policy traffic, and based on the Sub-TLV type=4 field, determines the traffic matching condition as SRv6 corresponding to the first traffic matching condition. Based on the SID (1) =END (R4) in the first traffic matching condition, hitting the SRv6 Policy traffic. Correspondingly executing the action of assigning SID(3) to END.X (R1 to R3). In the forwarding plane, the routing device R1, based on the local segment list, executing SL-1=3, updating the DA in the IPv6 header to SID(3)=END.X (R1 to R3). If the next-hop node is R3, the traffic is forwarded from R1 to R3. The process continues iterating via Policy through R4 to R5. Finally, R5 completes the pop-up of the outer IPv6 encapsulation, and iterates, based on the END.DX, to send SRv6 BE packet with popped outer IPv6 header from the outbound port Int2 based on the local forwarding table. The overall traffic forwarding selected the path with lower resource consumption, changing to R1-R3-R4-R5.

In this embodiment, obtaining a Flowspec routing by the routing device, the Flowspec routing includes a first traffic matching condition configured for the SRv6 traffic, and a traffic control action corresponding to the first traffic matching condition; matching a currently received packet based on the first traffic matching condition, and obtaining a target SRv6 packet; and determining a transmission mode of the target SRv6 packet based on the traffic control action. Since both the first traffic matching condition in the Flowspec routing and the traffic control actions corresponding to the first traffic matching condition are configured for the SRv6 traffic, it can identify the target SRv6 packet by the first traffic matching condition in Flowspec routing, and realize the identification and processing of the SRv6 packet based on the traffic control actions corresponding to the first traffic matching condition. Thus, the limitations of Flowspec technology in identifying and controlling SRv6 traffic are overcome.

Based on the above embodiments of the present application, another embodiment of the present application is provided. In this embodiment, the Flowspec routing further includes a second traffic matching condition aiming at other types of traffic.

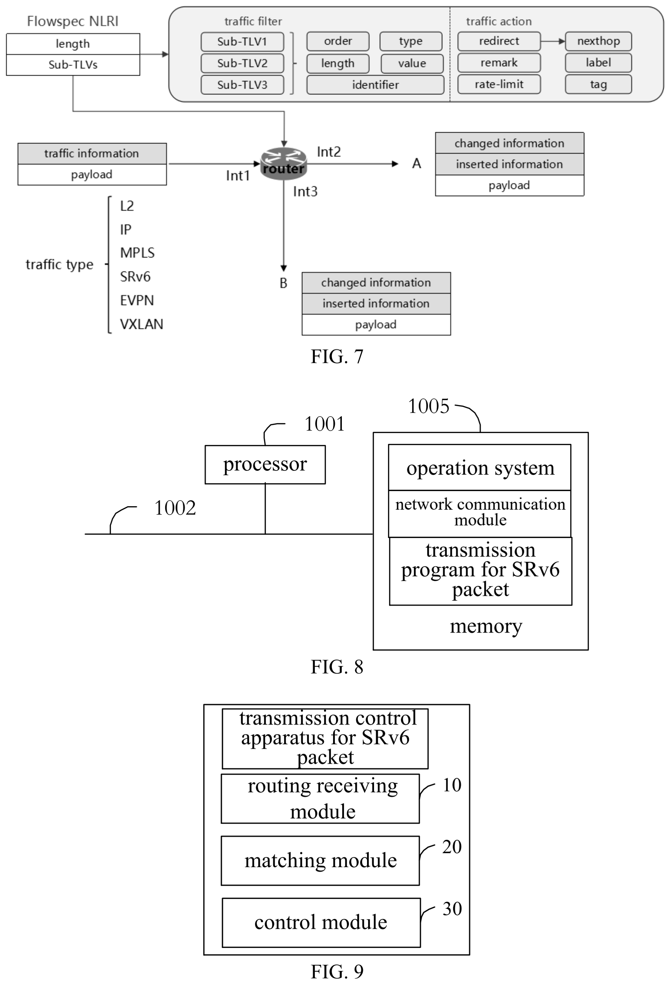

In this embodiment, as shown in FIG. 7, the other types of traffic include at least one of data link layer traffic, network layer traffic, MPLS traffic, and EVPN traffic.

In this embodiment, the Flowspec routing includes a type field, which indicates the matching conditions for different types of traffic included in the Flowspec routing.

As an example, the following contained in the "type" field is the second traffic matching condition configured for other types of traffic:
- 1 - L2 (Ether or VPN) traffic match;
- 2 - L3 (IP or VPN) traffic match: network layer traffic rules;
- 3 - MPLS traffic match;
- 5 - reserved for EVPN: EVPN (Ethernet Virtual Private Network) traffic rules.

As an example, the second traffic matching condition configured for other types of traffic can be set based on the characteristics of the type traffic.

As an example, based on the "type" field, matching the currently received packet, and obtaining the packet corresponding to the target type of traffic.

As an example, when a Flowspec routing is obtained, the Flowspec routing may contain the matching conditions for different types of traffic.

Therefore, it is necessary to match the currently received packet based on the traffic matching conditions corresponding to each traffic type in the "type" field of the Flowspec routing.

For example, if the "type" field in the current Flowspec routing includes the traffic matching conditions for MPLS traffic and EVPN traffic, then when matching the currently received packet based on the "type" field, if a certain traffic matching condition is hit, determining the currently received packet to be the packet corresponding to the target type traffic. (Where the target type traffic is the traffic that Flowspec routing wants to match and can match, and the packet corresponding to the target type traffic is at least one of the packets corresponding to MPLS traffic and the packet corresponding to EVPN traffic).

In this embodiment, the SRv6 Policy packet corresponding to the SRv6 Policy traffic further encapsulates the IPv6 header, and the matching a currently received packet based on the first traffic matching condition, and obtaining a target SRv6 packet includes:

Step A1: matching a first IPv6 header and/or a first routing extension header of the currently received packets in an encapsulation order based on the first traffic matching condition, and obtaining the target SRv6 packet.

As an example, the existence of various encapsulation schemes such as BSID (for header compression or header decompression), multiple IPv6 headers and routing extension headers may appear simultaneously in the packet. Therefore, during the process of matching the currently received packet based on the first traffic matching condition, matching the first IPv6 header and/or the first routing extension header in the encapsulation order of the currently received packet to obtain the target SRv6 packet, thus saving matching time.

In this embodiment, the matching a currently received packet based on the first traffic matching condition, and obtaining a target SRv6 packet includes:
Step A1: matching the currently received packet based on a priority of the first traffic matching condition and the second traffic matching condition and priorities of each matching item in the first traffic matching condition, and obtaining the target SRv6 packet.

In this embodiment, a priority of the first traffic matching condition is lower than a priority of the second traffic matching condition, and the priorities of each matching item in the first traffic matching condition, from highest to lowest, are: the next header field in the routing extension header, the segment list field in the routing extension header, the type field of the segment identifier in the routing extension header, the partial segment identifier field in the routing extension header, the remaining segment field in the routing extension header, the Flags field in the routing extension header, and the Tag field in the routing extension header.

As an example, if the first traffic matching condition contains only one of the aforementioned matching items, then during the process of matching the currently received packet based on the first traffic matching condition, it is not necessary to determine the priority of the aforementioned matching items.

As an example, if the first traffic matching condition simultaneously contains at least two of the aforementioned matching items, then matching the currently received packet based on the priority of the aforementioned matching items, which can improve the efficiency of traffic matching.

As an example, simultaneously, since different types of traffic have different processing priorities, it is necessary to match the currently received packet based on the priority of the first traffic matching condition and the priority of the second traffic matching condition corresponding to different types of traffic. The priority of the first traffic matching condition is lower than the priority of the second traffic matching condition.

In this embodiment, after the matching a currently received packet based on the first traffic matching condition, the method further includes:
in response to that matching the currently received packets and obtaining a target SRv6 packet based on the first traffic matching condition in the Flowspec routing, and simultaneously, matching the currently received packets to obtain a packet corresponding to other types of traffic based on the second traffic matching condition in the Flowspec routing, determining the target SRv6 packet obtained by matching to be invalid, and determining the packet corresponding to the other types of traffic obtained by matching to be valid.

As an example, since SRv6 traffic has a low processing priority, if the Flowspec routing contains a first traffic matching condition and a second traffic matching condition, then during the traffic matching process, in response to that matching the currently received packets and obtaining a target SRv6 packet based on the first traffic matching condition in the Flowspec routing, and simultaneously, matching the currently received packets to obtain a packet corresponding to other types of traffic based on the second traffic matching condition in the Flowspec routing, determining the target SRv6 packet obtained by matching to be invalid, and determining the packet corresponding to the other types of traffic obtained by matching to be valid. If, based on the first traffic matching condition in the Flowspec routing, matching the currently received packet, obtaining the target SRv6 packet, simultaneously no other types of traffic packets are matched, then determining the target SRv6 packet to be valid.

In this embodiment, the traffic control action further includes other redirection actions.

As an example, the traffic control action includes at least one of all rewritten actions in the first and second redirection actions designed above.

As an example, the traffic control action further includes other redirection actions specified by the original Flowspec technology.

Therefore, before determining the transmission control mode of the target SRv6 packet based on the traffic control action, it is necessary to determine whether the traffic control action corresponding to the first traffic matching condition simultaneously exists both the redirection action and other redirection actions, then the traffic control actions are considered conflicting, the Flowspec routing is determined to be invalid, and the step of determining the transmission control mode of the target SRv6 packet based on the traffic control action is not executed. If it does not exist, then the Flowspec routing is determined to be valid, and continue executing the step of determining the transmission control mode of the target SRv6 packet based on the traffic control action.

In this embodiment, the matching objects for SRv6 traffic (the first IPv6 header and/or the first routing extension header in the encapsulation order) are standardized. Standardized recommendations are made aiming at the priority and effectiveness conditions of the traffic matching conditions for various traffic types; and standardized recommendations are also made aiming at the conflict handling for redirection actions and the validity of Flowspec routing, thus facilitating the standardized implementation of the transmission control method for the SRv6 packet.

Referring to FIG. 8, which is a schematic diagram of the device structure of the hardware operating environment involved in the embodiments of the present application.

As shown in FIG. 8, a transmission control method for a SRv6 packet device may include: a processor 1001, a memory 1005, and a communication bus 1002. The communication bus 1002 is used to realize the connection and communication between the processor 1001 and the memory 1005.

In an embodiment, the transmission control method for the SRv6 packet device may further include a user port, a network port, a camera, a radio frequency (RF) circuitry, a sensor, a WIFI module, etc. The user port may include a display, an input submodule such as a keyboard, and may further include standard wired ports and wireless ports. The network port may include standard wired ports and wireless ports (such as a WIFI port).

Those skilled in the art will understand that the device structure for the transmission control method for the SRv6 packet shown in FIG. 8 does not constitute a limitation on the transmission control device for the SRv6 packet. It may include more or fewer components than shown, or combine certain components, or have different component arrangements.

As shown in FIG. 8, the memory 1005, as a storage medium, may include an operating system, a network communication module, and the SRv6 packet transmission control method program. The operating system is a program that manages and controls the device hardware and software resources of the transmission control method for the SRv6 packet, supporting the operation of the transmission control program for the SRv6 packet and other software and/or programs. The network communication module is used to realize communication between various components within the memory 1005, as well as communication with other hardware and software in the transmission control system for the SRv6 packet.

In the transmission control device for the SRv6 packet shown in FIG. 8, the processor 1001 executes the transmission control program for the SRv6 packet stored in the memory 1005, implementing the transmission control method for the SRv6 packet described above.

The specific implementation of the transmission control device for the SRv6 packet in the present application is basically the same as the embodiments of the transmission control method for the SRv6 packet described above, and will not be repeated here.

The present application further provides a transmission control apparatus for the SRv6 packet, applied to a routing device, as shown in FIG. 9. The apparatus includes:
a routing receiving module 10 configured for obtaining a Flowspec routing, the Flowspec routing includes a first traffic matching condition configured for the SRv6 traffic, and a traffic control action corresponding to the first traffic matching condition;
a matching module 20 configured for matching a currently received packet based on the first traffic matching condition, and obtaining a target SRv6 packet; and
a control module 30 configured for determining a transmission mode of the target SRv6 packet based on the traffic control action.

In a possible implementation of the present application, the SRv6 traffic includes SRv6 Policy traffic, the target SRv6 packet includes a SRv6 Policy packet corresponding to the SRv6 Policy traffic, the SRv6 Policy packet encapsulates a routing extension header, and a matching item in the first traffic matching condition includes at least one of following:
a next header field in the routing extension header;
a segment list field in the routing extension header;
a type field of a segment identifier in the routing extension header;
a partial segment identifier field in the routing extension header;
a remaining segment field in the routing extension header;
a Flags field in the routing extension header; and
a Tag field in the routing extension header.

In a possible implementation of the present application, the SRv6 traffic further includes SRv6 BE traffic, the target SRv6 packet further includes a SRv6 BE packet corresponding to the SRv6 BE traffic, the SRv6 BE packet encapsulates an IPv6 header, and a matching item in the first traffic matching condition further includes a destination address field in the IPv6 header.

In a possible implementation of the present application, the matching module 20 includes:
a first matching submodule, configured for matching a first IPv6 header and/or a first routing extension header of the currently received packets in an encapsulation order based on the first traffic matching condition, and obtaining the target SRv6 packet.

In a possible implementation of the present application, the traffic control action includes a first redirection actions configured for the SRv6 Policy traffic, and the first redirection action includes at least one of following:
a routing extension header popping action, configured to remove the routing extension header of the SRv6 Policy packet, encapsulate a preset segment identifier into the IPv6 header of the SRv6 Policy packet, and iterate the SRv6 Policy packet to a forwarding process of the SRv6 BE traffic by querying a forwarding table; the forwarding process is configured to map to a target port of the target SRv6 packet;
a remaining segment rewriting action, configured to modify an assignment of a remaining segment in the SRv6 Policy packet; an assignment of a modified remaining segment indicates a corresponding segment identifier, and the segment identifier is configured to map to a target port of the target SRv6 packet;
a Tag value modification action, configured to modify a Tag value in the SRv6 Policy packet, the Tag value is configured to indicates a packet type of the SRv6 Policy packet, the packet type is mapped to a data type of the target SRv6 packet; and
a segment identifier modification action, configured to delete, add, or change a segment identifier in the segment list, and the segment identifier is mapped to a target port of the target SRv6 packet.

In a possible implementation of the present application, the traffic control action further includes a second redirection action configured for the SRv6 BE traffic, and the second redirection action including at least one of following:
an IPv6 header popping action, configured to remove an IPv6 header of the SRv6 BE packet, and query a forwarding table based on a destination IP address in a payload; the forwarding table is mapped to the target port of the target SRv6 message;
a source address modification action, configured to modify a source address in the SRv6 BE packet to allow other routing devices to determine whether to receive the SRv6 BE packet based on the source address; and
a destination address modification action, configured to modify the destination address of the IPv6 header in the SRv6 BE packet; the destination address is mapped to a target port of the target SRv6 BE packet.

In a possible implementation of the present application, the Flowspec routing further includes a second traffic matching condition configured for other types of traffic.

The matching module 20 further includes:
a second matching submodule, configured for matching the currently received packet based on a priority of the first traffic matching condition and the second traffic matching condition and priorities of each matching item in the first traffic matching condition, and obtaining the target SRv6 packet.

A priority of the first traffic matching condition is lower than a priority of the second traffic matching condition, and the priorities of each matching item in the first traffic matching condition, from highest to lowest, are: the next header field in the routing extension header, the segment list field in the routing extension header, the type field of the segment identifier in the routing extension header, the partial segment identifier field in the routing extension header, the remaining segment field in the routing extension header, the Flags field in the routing extension header, and the Tag field in the routing extension header.

In a possible implementation of the present application, the other types of traffic include at least one of data link layer traffic, network layer traffic, MPLS traffic, and EVPN traffic;
after the matching a currently received packet based on the first traffic matching condition, the apparatus further includes:
an effectiveness determination module, configured for in response to that matching the currently received packets and obtaining a target SRv6 packet based on the first traffic matching condition in the Flowspec routing, and simultaneously, matching the currently received packets to obtain a packet corresponding to other types of traffic based on the second traffic matching condition in the Flowspec routing, determining the target SRv6 packet obtained by matching to be invalid, and determining the packet corresponding to the other types of traffic obtained by matching to be valid.

The specific implementation of the transmission control apparatus for the SRv6 packet in the present application is basically the same as the embodiments of the transmission control method for the SRv6 packet described above, and will not be repeated here.

The present application further provides a storage medium storing a transmission program for a SRv6 packet, the transmission program for the SRv6 packet is configured to implement the transmission control method for the SRv6 packet as described in any of the above items when executed by a processor.

The specific implementation of the storage medium in the present application is basically the same as the embodiments of the transmission control method for the SRv6 packet described above, and will not be repeated here.

In this document, the terms "comprising", "including", or any other variations thereof are intended to cover non-exclusive inclusion, such that a process, method, article, or system that comprises a list of elements includes not only those elements but also other elements not expressly listed, or elements inherent to such a process, method, article, or system. Without further limitation, an element defined by the phrase "comprising a/an..." does not exclude the presence of other identical elements in the process, method, article, or system that includes that element.

The sequence numbers of the embodiments described above are for descriptive purposes only and do not represent the superiority or inferiority of the embodiments.

By the above description of the embodiments, those skilled in the art can clearly understand that the methods of the above embodiments can be implemented by means of software plus necessary general-purpose hardware platforms. Of course, they can also be implemented by hardware, but in many cases the former is a preferred implementation. Based on this understanding, the technical solution of the present application, in essence or the part that contributes to the prior art, can be embodied in the form of a software product. This computer software product is stored in a storage medium (such as ROM/RAM, magnetic disk, optical disk) as described above, and includes several instructions to cause a terminal device (which may be a mobile phone, computer, server, air conditioner, or network device, etc.) to execute the methods described in the various embodiments of the present application.

The above are merely optional embodiments of the present application and do not limit the scope of the present application. Any equivalent structural or procedural transformations made based on the content of the present application's specification and drawings, or direct or indirect applications in other related technical fields, are similarly included within the scope of the present application.

## Claims

1. A transmission control method for a SRv6 packet, applied to a routing device, **characterized by** comprising:
obtaining a Flowspec routing, wherein the Flowspec routing comprises a first traffic matching condition configured for the SRv6 traffic, and a traffic control action corresponding to the first traffic matching condition;
matching a currently received packet based on the first traffic matching condition, and obtaining a target SRv6 packet; and
determining a transmission mode of the target SRv6 packet based on the traffic control action.

2. The transmission control method for the SRv6 packet according to claim 1, wherein the SRv6 traffic comprises SRv6 Policy traffic, the target SRv6 packet comprises a SRv6 Policy packet corresponding to the SRv6 Policy traffic, the SRv6 Policy packet encapsulates a routing extension header, and a matching item in the first traffic matching condition comprises at least one of following:
a next header field in the routing extension header;
a segment list field in the routing extension header;
a type field of a segment identifier in the routing extension header;
a partial segment identifier field in the routing extension header;
a remaining segment field in the routing extension header;
a Flags field in the routing extension header; and
a Tag field in the routing extension header.

3. The transmission control method for the SRv6 packet according to claim 2, wherein the SRv6 traffic further comprises SRv6 BE traffic, the target SRv6 packet further comprises a SRv6 BE packet corresponding to the SRv6 BE traffic, the SRv6 BE packet encapsulates an IPv6 header, and a matching item in the first traffic matching condition further comprises a destination address field in the IPv6 header.

4. The transmission control method for the SRv6 packet according to claim 3, wherein the SRv6 Policy packet corresponding to the SRv6 Policy traffic further encapsulates the IPv6 header, and the matching the currently received packet based on the first traffic matching condition, and obtaining the target SRv6 packet comprises:
matching a first IPv6 header and/or a first routing extension header of the currently received packets in an encapsulation order based on the first traffic matching condition, and obtaining the target SRv6 packet.

5. The transmission control method for the SRv6 packet according to any one of claims 3 to 4, wherein the traffic control action comprises a first redirection actions configured for the SRv6 Policy traffic, and the first redirection action comprises at least one of following:
a routing extension header popping action, configured to remove the routing extension header of the SRv6 Policy packet, encapsulate the preset segment identifier into the IPv6 header of the SRv6 Policy packet, and iterate the SRv6 Policy packet to the forwarding process of the SRv6 BE traffic by querying the forwarding table; wherein the forwarding process is configured to map to a target port of the target SRv6 packet;
a remaining segment rewriting action, configured to modify an assignment of a remaining segment in the SRv6 Policy packet; wherein an assignment of a modified remaining segment indicates a corresponding segment identifier, and the segment identifier is configured to map to a target port of the target SRv6 packet;
a Tag value modification action, configured to modify a Tag value in the SRv6 Policy packet, the Tag value is configured to indicates a packet type of the SRv6 Policy packet, the packet type is mapped to a data type of the target SRv6 packet; and
a segment identifier modification action, configured to delete, add, or change a segment identifier in the segment list, and the segment identifier is mapped to a target port of the target SRv6 packet.

6. The transmission control method for the SRv6 packet according to claim 5, wherein the traffic control action further comprises a second redirection action configured for the SRv6 BE traffic, and the second redirection action comprising at least one of following:
an IPv6 header popping action, configured to remove an IPv6 header of the SRv6 BE packet, and query a forwarding table based on a destination IP address in a payload; wherein the forwarding table is mapped to the target port of the target SRv6 message;
a source address modification action, configured to modify a source address in the SRv6 BE packet to allow other routing devices to determine whether to receive the SRv6 BE packet based on the source address; and
a destination address modification action, configured to modify the destination address of the IPv6 header in the SRv6 BE packet; wherein the destination address is mapped to a target port of the target SRv6 BE packet.

7. The transmission control method for the SRv6 packet according to claims 2 to 4, wherein the Flowspec routing further comprises a second traffic matching condition configured for other types of traffic;
the matching the currently received packet based on the first traffic matching condition, and obtaining the target SRv6 packet comprises:
matching the currently received packet based on a priority of the first traffic matching condition and the second traffic matching condition and priorities of each matching item in the first traffic matching condition, and obtaining the target SRv6 packet; and
wherein a priority of the first traffic matching condition is lower than a priority of the second traffic matching condition, and the priorities of each matching item in the first traffic matching condition, from highest to lowest, are: the next header field in the routing extension header, the segment list field in the routing extension header, the type field of the segment identifier in the routing extension header, the partial segment identifier field in the routing extension header, the remaining segment field in the routing extension header, the Flags field in the routing extension header, and the Tag field in the routing extension header.

8. The transmission control method for the SRv6 packet according to claim 7, wherein the other types of traffic comprise at least one of data link layer traffic, network layer traffic, MPLS traffic, and EVPN traffic;
after the matching the currently received packet based on the first traffic matching condition, the method further comprises:
in response to that matching the currently received packets and obtaining a target SRv6 packet based on the first traffic matching condition in the Flowspec routing, and simultaneously, matching the currently received packets to obtain a packet corresponding to other types of traffic based on the second traffic matching condition in the Flowspec routing, determining the target SRv6 packet obtained by matching to be invalid, and determining the packet corresponding to the other types of traffic obtained by matching to be valid.

9. A transmission control apparatus for a SRv6 packet, **characterized by** comprising:
a routing receiving module configured for obtaining a Flowspec routing, wherein the Flowspec routing comprises a first traffic matching condition configured for the SRv6 traffic, and a traffic control action corresponding to the first traffic matching condition;
a matching module configured for matching a currently received packet based on the first traffic matching condition, and obtaining a target SRv6 packet; and
a control module configured for determining a transmission mode of the target SRv6 packet based on the traffic control action.

10. A transmission device for a SRv6 packet, **characterized by** comprising: a memory, a processor, and a transmission program for the SRv6 packet stored in the memory and executable on the processor, the transmission program for the SRv6 packet is configured to implement the transmission control method for the SRv6 packet according to any one of claims 1 to 8.

11. A storage medium storing a transmission program for a SRv6 packet, the transmission program for the SRv6 packet is configured to implement the transmission control method for the SRv6 packet according to any one of claims 1 to 8 when executed by a processor.
